(19) Europäisches Patentamt
European Patent Office
Office européen des brevets

(11) Numéro de publication : **0 433 175 B1**

# (12) FASCICULE DE BREVET EUROPEEN

(45) Date de publication du fascicule du brevet : **13.09.95 Bulletin 95/37**

(51) Int. Cl.$^6$ : **G21F 9/06**

(21) Numéro de dépôt : **90403575.5**

(22) Date de dépôt : **13.12.90**

(54) **Procédé de récupération au moyen d'un éther-couronne du plutonium (IV) présent dans des solutions telles que les éffluents aqueux, les solutions concentrées de produits de fission et les solutions concentrées de plutonium.**

(30) Priorité : **15.12.89 FR 8916639**

(43) Date de publication de la demande : **19.06.91 Bulletin 91/25**

(45) Mention de la délivrance du brevet : **13.09.95 Bulletin 95/37**

(84) Etats contractants désignés : **BE DE ES FR GB IT SE**

(56) Documents cités :
**EP-A- 0 073 261**
**FR-A- 2 633 090**
**US-A- 4 683 124**
**CHEMICAL ABSTRACTS, vol. 105, 1986, page 504, résumé no. 198772f, Columbus, Ohio, US; J.P. SHUKLA et al.: "The effect of temperature on the extraction of uranium (VI) and plutonium (IV) from nitric acid by some crown ethers"**
**CHEMICAL ABSTRACTS, vol. 104, 1986, page 592, résumé no. 97609g, Columbus, Ohio, US; A.M. ROZEN et al.: "Investigation and selection of new extractants for removal of actinides"**
**CHEMICAL ABSTRACTS, vol. 97, 1982, page 398, résumé no. 61870h, Columbus, Ohio, US; A.M. ROZEN et al.: "Extraction of actinides and nitric acid by crown ethers"**

(73) Titulaire : **COGEMA COMPAGNIE GENERALE DES MATIERES NUCLEAIRES**
**2, rue Paul Dautier**
**B.P. 4**
**F-78141 Velizy-Villacoublay (FR)**

(72) Inventeur : **Foos, Jacques**
**33 rue Louis Scocard**
**F-91400 Orsay (FR)**
Inventeur : **Lemaire, Marc**
**23 rue Château Gaillard**
**F-69100 Villeurbanne (FR)**
Inventeur : **Guy, Alain**
**1 rue Urgons**
**F-77135 Pontcarre (FR)**
Inventeur : **Guyon, Vincent**
**235 rue Saint Martin**
**F-75003 Paris (FR)**
Inventeur : **Chomel, Rodolphe**
**27Bis Avenue de Champlin**
**F-84100 Orange (FR)**
Inventeur : **Delosge, André**
**4 Avenue Bel Horizon**
**F-30200 Bagnols sur Ceze (FR)**
Inventeur : **Doutreluigne, Pierre**
**15 rue de la Cerisaie**
**F-30200 Bagnols sur Ceze (FR)**
Inventeur : **Le Roy, Henri**
**Résidence du Val l'Abbé**
**F-50120 Equeurdreville (FR)**

(74) Mandataire : **Des Termes, Monique et al**
**Société Brevatome**
**25, rue de Ponthieu**
**F-75008 Paris (FR)**

EP 0 433 175 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

PROCEDE DE RECUPERATION AU MOYEN D'UN ETHER COURONNE DU PLUTONIUM (IV) PRESENT DANS DES SOLUTIONS TELLES QUE LES EFFLUENTS AQUEUX, LES SOLUTIONS CONCENTREES DE PRODUITS DE FISSION ET LES SOLUTIONS CONCENTREES DE PLUTONIUM.

La présente invention concerne un procédé de récupération du plutonium (IV) présent dans des solutions aqueuses.

De façon plus précise, elle concerne un procédé utilisant au moins un éther couronne, soit pour récupérer les dernières traces de plutonium dans des solutions aqueuses polluées par des sels de ce métal, par exemple les solutions concentrées de produits de fission issues du retraitenent des combustibles irradiés et les effluents des installations de retraitement, soit pour séparer le plutonium de L'américium à partir de solutions concentrées de plutonium.

On sait que les éthers-couronnes tels que le DCH18C6, sont capables d'extraire le plutonium (IV) et l'uranium (VI) à partir de solutions nitriques, comme il est décrit par Shukla et col, dans Chemical Abstracts, vol 105, 1986, page 504, résumé n° 198772.

On a aussi envisagé d'utiliser de tels éthers-couronnes à la place du tributyl phosphate pour récupérer les actinides, comme il est décrit par Rozen et Coll dans Chemical Abstracts, vol 104, 1988, page 592, résumé n°97609.

Depuis plusieurs années, la technique la plus largement utilisée pour réaliser le retraitement des combustibles nucléaires irradiés consiste à dissoudre le combustible dans une solution nitrique, et à mettre ensuite la solution nitrique obtenue en contact avec un solvant organique pour extraire dans celui-ci l'uranium et le plutonium et les séparer de la majorité des produits de fission qui restent en solution aqueuse ; cette solution aqueuse correspond une solution concentrée de produit de fission mais elle contient généralement des traces de plutonium qu'il est intéressant de récupérer. De même, on récupère en fin de traitement des effluents aqueux contenant encore quelques traces de plutonium qu'il serait intéressant de récupérer.

Les procédés connus actuellement pour effectuer ce genre de traitement conduisent à l'obtention de résultats satisfaisants, mais il est toujours d'un grand intérêt d'améliorer encore le taux de décontamination en plutonium de toutes ces solutions.

Un autre problème de décontamination et de purification du plutonium se pose dans le cas des solutions concentrées de plutonium qui, lors de leur vieillissement, se trouvent contaminées par les descendants du plutonium, en particulier l'américium qu'il est important de séparer.

La présente invention a précisément pour objet un procédé de récupération du plutonium présent dans une solution aqueuse, qui permet aussi bien de récupérer les dernières traces de plutonium dans les solutions très diluées que de séparer le plutonium de l'américium à partir de solutions concentrées.

Selon l'invention, ces résultats sont obtenus en utilisant comme extractant du plutonium un éther-couronne.

Selon l'invention, le procédé de récupération du plutonium (IV) présent dans une solution aqueuse constituée soit par une solution concentrée de produits de fission provenant du premier cycle de retraitement des combustibles nucléaires irradiés, soit par un effluent aqueux provenant d'une installation de retraitement de combustibles nucléaires irradiés, soit par une solution concentrée de plutonium contenant de l'américium, consiste à mettre en contact cette solution avec un éther couronne, ce qui permet d'obtenir un taux de décontamination en plutonium très élevé de la solution aqueuse.

En effet, conformément à l'invention, on a trouvé que les éthers couronnes avaient une affinité élevée pour le plutonium et qu'ils pouvaient être utilisés pour complexer les traces de plutonium restant dans une solution aqueuse et les extraire dans un solvant organique ou les fixer sur une phase solide.

Les éthers couronnes susceptibles d'être utilisés dans le procédé de l'invention peuvent être de différents types, par exemple du, type de ceux décrits dans la publication de E. WEBER "Crown compounds, properties and practice", p. 34-82. Ainsi, on peut utiliser les éthers couronnes répondant aux formules (I) et (II)

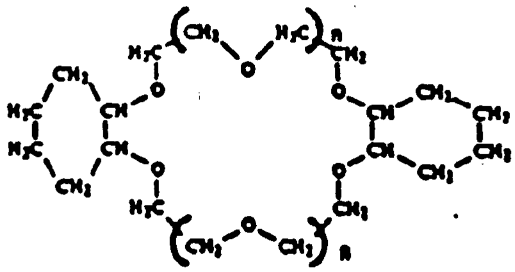

(I)

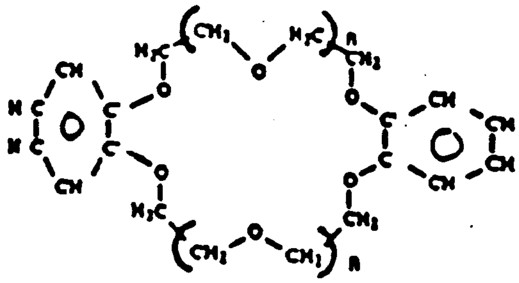

(II)

dans lesquelles n est égal à 0 ou est un nombre entier allant de 1 à 4.

A titre d'exemple de tels éthers couronnes, on peut citer ceux de formule (I) pour lesquels n est égal à 1 (DCH 18C6) ou n est égal à 2 (DCH 24C8), et ceux de formule (II) pour lesquels n est égal à 1 (DB 18C6) et n est égal à 2.

On peut encore utiliser les éthers couronnes répondant aux formules suivantes :

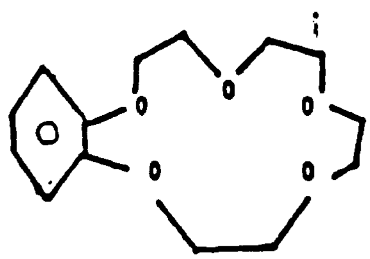

(III)

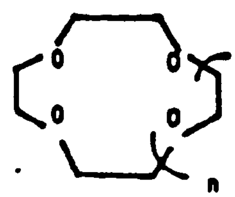

(IV)

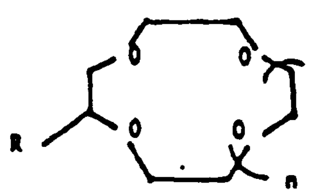

(V)

dans lesquelles n est égal à 0, 1 ou 2.

On peut utiliser ces éthers couronnes soit sous la forme de mélanges d'isomères, soit sous la forme d'isomères purs.

De préférence, lorsque l'éther couronne répond à la formule (I) dans laquelle n est égal à 1, on utilise l'isomère cis-syn-cis dans le cas des solutions contenant des traces de plutonium, car il présente une affinité supérieure pour le plutonium.

En revanche, dans le cas des solutions concentrées de plutonium, on préfère utiliser l'isomère cis-anti-cis car la solubilité des complexes Pu-isomère cis-anti-cis est plus élevée que celle des complexes Pu-isomère cis-syn-cis.

En effet, à titre d'exemple, dans le cas de l'isomère cis-syn-cis, la solubilité du complexe est inférieure à 4 g/l alors qu'elle est supérieure à 30 g/l avec l'isomère cis-anti-cis lorsque la teneur en DCH18C6 est dans les deux cas de 0,268 mol/l.

Ainsi, lorsqu'on traite des solutions concentrées de plutonium telles que les solutions de plutonium contenant de l'américium, on peut extraire la totalité du plutonium dans une solution organique sans risque de précipitation.

Aussi, selon un premier mode de mise en oeuvre du procédé de l'invention qui peut être utilisé aussi bien avec des solutions très diluées qu'avec des solutions concentrées de plutonium, on met en contact la solution aqueuse contenant le plutonium avec une solution organique comprenant au moins un éther couronne et on récupère le plutonium extrait dans la solution organique par réextraction dans une solution aqueuse.

Généralement, la solution organique utilisée comprend un diluant.

A titre d'exemple de diluants susceptibles d'être utilisés, on peut citer les solvants chlorés tels que $CHCl_3$, $CH_2Cl_2$, $CCl_3CH_3$, $CHCl_2CHCl_2$, $ClCH_2CH_2Cl$ et le dichlorobenzène, l'éther, les hydrocarbures tels que l'heptane, le dodécane, le benzène et les alkylbenzènes, les alcools gras, le benzonitrile et le nitrobenzène.

De préférence, on utilise comme diluant le benzonitrile, le nitrobenzène ou le dichloréthane.

La concentration en éther couronne de la solution organique peut varier dans une large gamme. Elle est choisie en fonction du diluant utilisé de façon à extraire sélectivement la quantité maximale de plutonium et à obtenir une solution organique parfaitement homogène dans laquelle ne se pose aucun problème de cristallisation de l'éther couronne ou du complexe éther couronne-Pu.

Généralement on utilise une concentration en éther couronne de la solution organique allant de $10^{-3}$ à 2,5 mol/l.

Pour obtenir une bonne séparation du plutonium des autres métaux présents, il est toutefois préférable de ne pas utiliser une concentration très élevée en éther-couronne, car on a remarqué avec le DCH18C6 que le rapport Pu extrait/produits de fission extraits augmente lorsque la concentration en DCH18C6 diminue.

A titre d'exemple, avec l'isomère cis-anti-cis du DCH18C6, on peut utiliser une concentration en éther-couronne de 10% en poids/vol.

Après extraction du plutonium dans la solution organique, on peut récupérer celui-ci par réextraction dans une solution aqueuse, par exemple de l'eau ou une solution contenant un acide hydrophile. L'acide hydrophile peut être choisi par exemple parmi l'acide sulfurique, l'acide chlorhydrique, l'acide fluorhydrique et l'acide phosphorique.

De préférence, on utilise une solution d'acide sulfurique ayant une concentration en acide sulfurique de 0,05 à 2 mol/l.

De préférence encore, on opère avec un excès d'ion sulfate par rapport à la quantité de Pu à réextraire, par exemple un excès tel que le rapport de la quantité en $SO_4^{2-}$ sur la quantité en Pu soit supérieur ou égal à 12. A titre d'exemple, on peut utiliser une solution aqueuse à 0,5 mol/l de $H_2SO_4$.

Après réextraction du plutonium, on peut soumettre la solution organique $O_4$, obtenue après cette étape, à un traitement de purification en vue de la réutiliser pour la première étape d'extractiion du plutonium.

Ce traitement peut consister en un lavage par une solution aqueuse d'acide sulfurique ayant une concentration en $H_2SO_4$ supérieure à celle utilisée dans l'étape de réextraction du Pu, par exemple une solution à 3 mol/l de $H_2SO_4$.

De préférence encore, dans ce premier mode de réalisation du procédé de l'invention, on effectue une étape supplémentaire de lavage de la solution organique ayant extrait le plutonium par une solution aqueuse d'acide nitrique, avant de réaliser l'étape de réextraction du plutonium.

Ceci permet d'éliminer les produits de fission ou l'américium qui auraient éventuellement été extraits dans la solution organique et d'obtenir en fin de procédé une solution de plutonium ayant un degré de pureté plus élevé.

Pour ces lavages, on utilise de préférence des solutions d'acide nitrique ayant une concentration en acide nitrique de 2 à 5 mol/l. En effet, une concentration élevée en $HNO_3$ est favorable à la réextraction des autres métaux, tels que les produits de fission. On peut par exemple utiliser une solution de $HNO_3$ 4,5N.

Généralement, les solutions aqueuses de départ sont des solutions nitriques et il est avantageux d'ajuster leur concentration en acide nitrique à des valeurs d'au moins 4 mol/l pour favoriser l'extraction du plutonium dans le solvant organique.

Toutefois, avec les solutions concentrées de plutonium contenant de l'américium, il est avantageux de maintenir la concentration en acide nitrique de la solution à une valeur de 2 à 4 mol/l pour améliorer la sélectivité de l'extraction pour le plutonium.

Par ailleurs, lorsque le plutonium de la solution de départ n'est pas sous la forme de Pu(IV), on réalise une étape préliminaire d'oxydation de Pu(III) en Pu(IV) qui peut être réalisée au moyen de vapeurs nitreuses, ce qui correspond à la réaction suivante :

$$Pu^{3+} + NO_2 \rightarrow Pu^{4+} + NO_2^-$$

Dans ce premier mode de mise en oeuvre du procédé de l'invention, on peut effectuer la mise en contact entre les solutions aqueuses et organiques dans des appareillages classiques assurant le mélange des deux

phases puis leur séparation, par exemple dans des mélangeurs-décanteurs et dans des colonnes d'échange à co-courant ou à contre-courant comme les colonnes pulsées.

Pour la mise en contact de la solution aqueuse de départ contenant le plutonium avec la solution organique contenant l'éther-couronne, on choisit le rapport en volume entre les deux solutions $V_{aq}/V_{org}$

où

$V_{aq}$ = volume de la solution aqueuse

$V_{org}$ = volume de la solution organique de façon à obtenir les meilleures conditions d'extraction du plutonium.

De préférence, lorsque l'éther-couronne est le DCH18C6, on utilise un rapport $V_{aq}/V_{org}$ élevé, supérieur à 4, par exemple de 4 à 15, car la sélectivité du solvant pour le Pu augmente avec la valeur de ce rapport.

Toutefois, la valeur du rapport $V_{aq}/V_{org}$ choisie dépend aussi de la concentration initiale en Pu de la solution aqueuse traitée car les sites de l'éther-couronne ne doivent pas être saturés avant que tout le plutonium ne soit retenu par l'éther-couronne.

Pour améliorer le taux d'extraction du plutonium présent dans la solution aqueuse, on peut réaliser l'extraction sur plusieurs étages, en utilisant par exemple une solution organique nouvelle dans chaque étage. Ainsi, lorsqu'on traite de cette façon un effluent aqueux contenant du Pu et des produits de fission, avec un rapport $V_{aq}/V_{org}$ = 10, en utilisant du DCH18C6 à 2 mol/l dans du nitrobenzène, on peut extraire 100% du Pu en opérant avec 4 étages.

Selon un second mode de mise en oeuvre du procédé de l'invention adapté au traitement de solutions contenant des traces de plutonium (IV), l'éther couronne est fixé sur une phase solide et l'on met en contact cette phase solide avec la solution aqueuse contenant les traces de plutonium pour retenir le plutonium sur cette phase solide.

Ce second mode de mise en oeuvre du procédé est très avantageux car on peut effectuer cette mise en contact par filtration de la solution à travers cette phase solide et retenir ainsi le plutonium sur cette phase solide.

Dans ce second mode de mise en oeuvre du procédé, l'éther couronne peut être fixé sur la phase solide par une liaison chimique ou par adsorption. La phase solide peut être en matériau inorganique ou organique.

A titre d'exemple de matériau inorganique, on peut citer la silice, l'alumine et d'autres substances à base de silicium, par exemple le Florisil®.

A titre d'exemple de matériau organique, on peut citer des polymères capables de retenir l'éther couronne soit par une liaison chimique soit par adsorption.

Dans ce second mode de mise en oeuvre du procédé de l'invention, on peut récupérer ensuite le plutonium par mise en contact de la phase solide avec une solution d'un acide hydrophile tel que $H_2SO_4$, HCl,HF ou $H_3PO_4$, ou avec une solution d'un agent réducteur, par exemple une solution de nitrate d'hydroxylamine.

Comme on l'a vu précédemment, le procédé de l'invention peut être utilisé pour récupérer les traces de plutonium dans les solutions concentrés de produits de fission provenant du premier cycle de traitement des combustibles nucléaires irradiés; il peut également être utilisé pour récupérer les traces de plutonium dans des effluents aqueux contenant également de l'américium et du strontium. Dans ce dernier cas, on extrait simultanément l'americium et le strontium.

D'autres caractéristiques et avantages de l'invention apparaîtront mieux à la lecture de la description qui suit donnée bien entendu à titre illustratif et non limitatif en référence au dessin annexé, qui est un diagramme représentant un exemple de réalisation du premier mode de mise en oeuvre du procédé de l'invention, pour le traitement d'une solution concentrée de produits de fission (PF).

Sur cette figure, on voit que le procédé de l'invention comprend une première étape d'extraction du plutonium, deux étapes de lavage et une étape de réextraction du plutonium.

Dans la première étape d'extraction du plutonium, on met en contact un volume de la solution concentrée de produits de fission $A_0$ avec un volume d'une solution organique $O_1$ constituée par du DCH 18C6 (mélange d'isomères) à 25% (en P/V) dans le benzonitrile.

Après cette étape d'extraction du plutonium, on obtient une solution aqueuse $A_1$ contenant essentiellement les produits de fission et la solution organique $O_1$ qui contient la quasi-totalité du plutonium présent dans la solution concentrée de produits de fission et des traces d'uranium et de produits de fission.

On réalise successivement deux lavages de cette solution $O_1$ par de l'acide nitrique 4N en récupérant ainsi une première solution aqueuse $A_2$ contenant l'uranium et les produits de fission et une deuxième solution aqueuse $A_3$ contenant encore de l'uranium et des produits de fission.

Après ces deux étapes de lavage, la solution organique $O_1$ est mise en contact avec une solution aqueuse d'acide sulfurique 1N pour réextraire le plutonium en phase aqueuse. On obtient ainsi une solution aqueuse de plutonium $A_4$ et une solution organique $O_1$ débarrassée du plutonium qui peut être recyclé pour la première étape d'extraction du plutonium.

EXEMPLE 1 : Récupération des traces de plutonium présent dans une solution concentrée de produits de fission.

Dans cet exemple, on traite de la façon décrite ci-dessus une solution concentrée de produits de fission polluée par des traces de plutonium ayant la composition suivante :

$HNO_3$ : 4 mol $l^{-1}$
Pu : 4,7 mg $l^{-1}$
Tc : 321 mg $l^{-1}$
Ba : 398 mg $l^{-1}$
Ru : 1230 mg $l^{-1}$
U : 1472 mg $l^{-1}$
Pd : 12 mg $l^{-1}$
Rh : 138 mg $l^{-1}$
Sr : 270 mg $l^{-1}$
ΣPF : 96910 mCi $l^{-1}$

en utilisant pour l'extraction une solution de DCH18C6 dilué à 25% en P/V dans le benzonitrile.

Les compositions des solutions aqueuses $A_1$, $A_2$, $A_3$ et $A_4$ obtenues dans ces conditions sont données dans le tableau qui suit.

Tableau : composition des solutions aqueuses

| Solution | Pu | U | PF |
|---|---|---|---|
| $A_1$ | 0 | 34,2 % | 96 % |
| $A_2$ | 0 | 35,4 % | 2,9 % |
| $A_3$ | 2 % | 15,4 % | 0,6 % |
| $A_4$ | 98 % | 9 % | 0,3 % |

Au vu de ces résultats, on constate qu'après une extraction et deux lavages, on récupère une solution aqueuse $A_4$ contenant 98% du plutonium présent initialement dans la solution concentrée de produits de fission $A_0$. De plus, l'activité gamma de la solution aqueuse $A_4$ ne représente que 0,3% de l'activité gamma initiale. Le procédé de l'invention permet donc de récupérer très facilement la quasi-totalité du plutonium contenu dans ce type de solution.

EXEMPLE 2 : Récupération des traces de plutonium contenu dans une solution concentrée de produits de fission

Dans cet exemple, on traite une solution concentrée de produits de fission contenant :

- 2,92 mg/l de $Pu^{4+}$
- 167 Ci/l de produits de fission.

On met en contact un volume de cette solution avec deux volumes d'une solution de DCH 18C6 (mélange d'isomères) à 5% (en P/V) dans le chloroforme, puis on lave trois fois la solution organique par de l'acide nitrique 5N en utilisant deux volumes de solution nitrique pour un volume de solution organique. On réextrait ensuite le plutonium par de l'eau en utilisant un volume de solution organique pour deux volumes d'eau.

On récupère ainsi en solution aqueuse 41% du plutonium de départ et l'activité résiduelle en produits de fission de cette solution aqueuse n'est que de 4,6 mCi/l.

EXEMPLE 3 : Traitement d'effluents aqueux contenant des traces de plutonium, d'américium et de strontium

Dans cet exemple, on traite un effluent ayant la composition suivante :

Césium $10^{-2}$ µg $l^{-1}$
Ruthénium 4 µg $l^{-1}$
Antimoine $1.10^{-1}$ µg $l^{-1}$

Strontium 1,8.$10^5$ B $l^{-1}$
Plutonium 0,15 µg $l^{-1}$
Américium 2.$10^3$ µg $l^{-1}$

Pour réaliser l'extraction du plutonium, on met en contact cet effluent avec une solution organique de DCH 18C6 (mélange d'isomères) à 5% (en P/V) dans le chloroforme et on récupère un effluent aqueux ayant la composition suivante après extraction :

Césium 0,9.$10^{-2}$ µg $l^{-1}$
Ruthénium 4 µg $l^{-1}$
Antimoine 2.$10^{-1}$ µg $l^{-1}$
Strontium 0,6.$10^5$B$l^{-1}$ (33% du Sr de départ)
Plutonium 0,098 µg $l^{-1}$ (35% du Pu de départ)
Américium 0,8.$10^3$ µg $l^{-1}$ (38% de l'Am de départ)

Ces résultats montrent qu'avec une seule extraction, il est possible de diminuer de près des 2/3 les teneurs en strontium, en plutonium et en américium de ces effluents aqueux.

EXEMPLE 4 : Traitement d'effluents aqueux contenant Pu, Am et Cm

Dans cet exemple, on traite un effluent aqueux ayant une concentration en acide nitrique de 0,7 mol/l et contenant :

Pu : 380 µg/l
Am : 30 µg/l
Cm : 0,7 µg/l.

On met en contact un volume de cet effluent avec un volume d'une solution organique contenant 0,12 mol/l de l'éther couronne DCH 18C6 (mélange d'isomères) dans du chloroforme. Après séparation des solutions, on détermine les teneurs en Pu, Am et Cm de la solution organique. On trouve ainsi qu'elle a extrait :

Pu : 58% de la quantité initiale
Am : 49% de la quantité initiale
Cm : 69% de la quantité initiale

soit 55% au total des émetteurs α (Pu + Am + Cm).

EXEMPLE 5 : Séparation du plutonium sur une phase solide

Dans cet exemple, on utilise une phase solide sur laquelle est fixé l'éther couronne pour éliminer les traces de plutonium d'un effluent aqueux.

Tout d'abord, on fixe sur la phase solide l'éther couronne DCH18C6 (mélange d'isomères) en utilisant une solution de DCH 18C6 à 5% (en P/V) dans le chloroforme, et en opérant de la façon suivante.

On fait passer 5 ml de la solution de DCH 18C6 dans une colonne de 1 cm de diamètre X 9 cm de long remplie de 2 g de Florisil® (silicate de magnésium). On fait ensuite passer du $HNO_3$ à 4 mol/l pour éliminer l'excès de DCH18C6 et mettre la colonne à l'équilibre.

Après cette fixation de l'éther couronne sur le Florisil, on fait circuler sur la colonne 0,5 ml de l'effluent à décontaminer qui contient environ 0,5 g/l de plutonium. On lave ensuite la phase solide par de l'acide nitrique 4N. La teneur en plutonium de l'effluent qui sort de la colonne est de 0,03 g/l.

Ainsi, on a fixé sur la phase solide 94% du plutonium contenu dans l'effluent aqueux.

On récupère ensuite le plutonium par lavage réducteur de la colonne au moyen d'une solution de nitrate d'hydroxylamine.

Les exemples 6 à 8 qui suivent, illustrent l'utilisation d'éthers couronnes pour séparer le plutonium de l'américium à partir de solutions aqueuses concentrées en plutonium.

EXEMPLE 6 : Purification de solutions aqueuses concentrées de plutonium.

Dans cet exemple, on part d'une solution aqueuse contenant 10,5 g/l de Pu, 4,8 mg/l de Am, et 4 mol/l de $HNO_3$, et on purifie cette solution de l'américium qu'elle contient en extrayant le plutonium dans un solvant organique constitué par du benzonitrile contenant 10% (en P/V) de DCH18C6 (mélange d'isomères).

Dans cet exemple, on réalise une étape d'extraction et une étape de lavage en suivant le même mode opératoire que celui décrit sur la figure annexée. Pour l'extraction du plutonium, on met en contact un volume de solution aqueuse de plutonium et d'américium avec un volume du solvant organique pendant 10 minutes, puis on sépare les phases et on recueille après cette extraction, une solution aqueuse $A_1$ qui comprend 0,17% du plutonium d'origine et 69% de l'américium d'origine et un solvant organique contenant plus de 99% du plutonium d'origine et 31% de l'américium d'origine.

Après cette extraction, on soumet le solvant à un lavage par de l'acide nitrique 4N en utilisant un volume de solvant organique pour 5 volumes d'acide nitrique et un temps de contact de 10 min. On récupère ainsi une solution aqueuse $A_2$ contenant 0,5% du plutonium d'origine et 0,5% de l'américium d'origine.

Le solvant organique contient donc après lavage plus de 99% du plutonium d'origine et environ 30% de l'américium d'origine.

On réextrait le plutonium par lavage avec une solution contenant un anion hydrophile ou par une solution réductrice.

EXEMPLE 7.

On suit le même mode opératoire que dans l'exemple 6 pour traiter la même solution de plutonium et d'américium mais en utilisant à la place du mélange d'isomères DCH18C6, l'isomère cis-anti-cis du DCH18C6 qui a été préparé de la façon suivante :

On dissout 24,6 g de DCH18C6 du commerce contenant 62,9% d'isomère cis-syn-cis (15,47 g), 37% d'isomère cis-anti-cis (9,1 g) et moins de 1% des autres isomères du DCH18C6 dans 74 ml d'heptane et on recristallise l'isomère cis-anti-cis à partir de cette solution pendant 24 h à la température ambiante. On recueille ainsi par filtration 3,4 g d'isomère cis-anti-cis cristallisé.

On soumet ensuite la solution à une évaporation et l'on recueille 21,2 g d'un mélange d'isomères ayant maintenant une teneur en isomère cis-syn-cis d'environ 73%.

On ajoute alors à ce mélange 850 ml d'heptane et 108 ml d'une solution de nitrate d'uranyle $(NO_3)_2UO_2$, $6H_20$ à 25% en poids et on soumet l'ensemble à une agitation, pendant 24 h, à la température ambiante. On filtre ensuite le précipité formé, puis on le sèche à l'étuve à 60°C pendant 20 h. On obtient ainsi 12 g de précipité que l'on dissout dans 300 ml de chloroforme et 150 ml d'eau distillée. On sèche ensuite la phase organique sur $MgSO_4$, on filtre et on évapore le solvant sous vide, ce qui donne 5,6 g d'isomère cis-anti-cis, soit un rendement de 98,9% et on récupère l'isomère cis-syn-cis à partir de la solution de filtration par évaporation du solvant. On obtient ainsi 15,4 g d'isomère cis-syn-cis, soit un rendement de 99,5%.

On utilise alors l'isomère cis-anti-cis ainsi préparé, à raison de 10% (en P/V) dans du benzonitrile pour réaliser l'extraction du Pu comme dans l'exemple 6.

Dans ces conditions, la solution $A_1$ contient 0,35% du plutoniuim d'origine et 63% de l'américium d'origine et la solution $A_2$ contient 0,71% du plutonium d'origine et 0,9% de l'américium d'origine.

On récupère ainsi dans le solvant organique environ 99% du plutonium d'origine et un peu plus de 35% de l'américium d'origine.

L'isomère cis-anti-cis ne permet pas d'obtenir un taux d'extraction du plutonium aussi élevé que dans le cas du mélange d'isomères, mais il est plus intéressant car la solubilité du complexe Pu-DCH18C6 qui est supérieure à 30 g/l avec l'isomère cis-anti-cis est plus élevée qu'avec le mélange d'isomères où cette solubilité est inférieure à 17 g/l.

Aussi, l'utilisation de l'isomère cis-anti-cis est plus intéressante dans le cas de solutions concentrées de plutonium, car on peut extraire la totalité du plutonium dans le solvant organique sans risque de précipitations du complexe.

A titre comparatif, on a effectué la même séparation en utilisant comme solvant du tributylphosphate à 28% en volume dans du dodécance au lieu du DCH18C6 dans le benzonitrile.

Dans ces conditions, on obtient après lavage un solvant organique contenant 80% du plutonium d'origine et 5% de l'américium.

Ainsi, l'utilisation d'un éther-couronne permet d'améliorer de façon très importante le taux d'extraction et de récupération du plutonium.

EXEMPLE 8 :

Cet exemple illustre également le traitement d'une solution aqueuse contenant du plutonium et de l'américium.

Dans cet exemple, on part d'une solution aqueuse contenant :

Pu : 30 g/l
Am : 9,5 mg/l
$HNO_3$ : 4 mol/l

et on utilise comme solvant organique l'isomère cis-anti-cis du DCH18C6 à une concentration de 20% (P/V) dans le benzonitrile.

On réalise l'extraction dans une batterie comportant 3 étages avec un rapport $V_{aq}/V_{org}$ = 3 en faisant circuler à contre-courant la solution aqueuse et ce solvant organique, puis on lave le solvant organique dans une batterie à 2 étages par de l'acide nitrique 4N circulant à contre-courant avec un rapport en volume $V_{aq}/V_{org}$ égal à 1 et on recycle la solution de lavage dans la batterie d'extraction.

Dans ces conditions, on obtient en fin d'opération :

- un solvant organique contenant

Pu : 60 g/l

Am : 7,4 µg/l

- une solution aqueuse contenant

Pu : 0,02 mg/l

Am : 6,28 mg/l

## Revendications

1. Procédé de récupération du plutonium (IV) présent dans une solution aqueuse constituée soit par une solution concentrée de produits de fission provenant du premier cycle de retraitement des combustibles nucléaires irradiés, soit par un effluent aqueux provenant d'une installation de retraitement de combustibles nucléaires irradiés, soit par une solution concentrée de plutonium contenant de l'américium, caractérisé en ce que l'on met en contact ladite solution aqueuse avec une solution organique comprenant au moins un éther-couronne et en ce que l'on récupère le plutonium extrait dans la solution organique par réextraction dans une solution aqueuse.

2. Procédé selon la revendication 1, caractérisé en ce que la solution organique comprend un diluant constitué par du benzonitrile, du nitrobenzène ou du dichloréthane.

3. Procédé selon la revendication 2, caractérisé en ce que la concentration en éther-couronne de la solution organique est de $10^{-3}$ à 2,5 mol/l.

4. Procédé selon la revendication 1, caractérisé en ce que la solution aqueuse de réextraction est une solution d'acide sulfurique contenant de 0,05 à 2 mol/l d'acide sulfurique.

5. Procédé selon l'une quelconque des revendications 1 à 4, caractérisé en ce qu'il comprend au moins une étape supplémentaire de lavage de la solution organique ayant extrait le plutonium par une solution aqueuse d'acide nitrique, avant de réaliser l'étape de réextraction du plutonium.

6. Procédé selon la revendication 5, caractérisé en ce que la solution aqueuse d'acide nitrique a une concentration en acide nitrique de 2 à 5 mol/l.

7. Procédé de récupération des traces de plutonium (IV) présentes dans une solution aqueuse, caractérisé en ce que l'on met en contact cette solution aqueuse avec une phase solide comprenant au moins un éther-couronne pour retenir le plutonium sur cette phase solide.

8. Procédé selon la revendication 7, caractérisé en ce que la phase solide est en matériau inorganique ou organique et en ce que l'éther-couronne est fixé sur cette phase solide par une liaison chimique ou par adsorption.

9. Procédé selon la revendication 8, caractérisé en ce que la phase solide est du Florisil.

10. Procédé selon l'une quelconque des revendications 7 à 9, caractérisé en ce que l'on récupère ensuite le plutonium par mise en contact de la phase solide avec une solution d'un agent réducteur ou d'un acide hydrophile.

11. Procédé selon l'une quelconque des revendications 1 à 10, caractérisé en ce que l'éther-couronne répond aux formules :

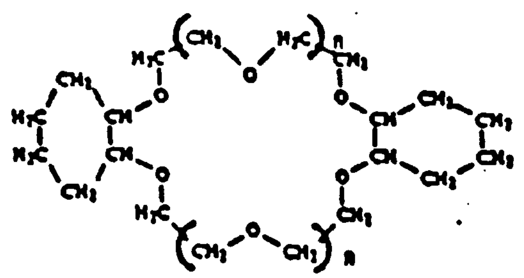

(I)

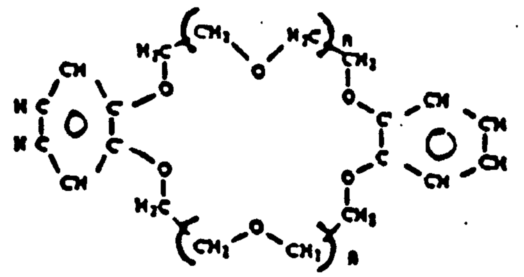

(II)

dans lesquelles n = 0 ou est un nombre entier allant de 1 à 40.

**12.** Procédé selon la revendication 11, caractérisé en ce que l'éther-couronne répond à la formule (I) avec n = 1.

**13.** Procédé selon la revendication 11, caractérisé en ce que l'éther-couronne est l'isomère cis-syn-cis de l'éther-couronne de formule (I) dans laquelle n = 1.

**14.** Procédé selon l'une quelconque des revendications 1 à 6, caractérisé en ce que la solution aqueuse est une solution concentrée de plutonium contenant de l'américium et en ce que l'on utilise l'isomère cis-anti-cis de l'éther-couronne de formule :

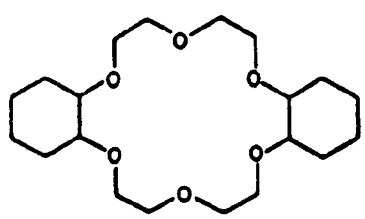

**Patentansprüche**

**1.** Verfahren zur Rückgewinnung von Plutonium (IV), welches in einer wäßrigen Lösung vorhanden ist, die entweder aus einer konzentrierten Lösung von Spaltprodukten aus dem ersten Zyklus der Wiederaufarbeitung von bestrahlten Kernbrennstoffen oder aus einem Abwasser aus einer Anlage zur Wiederaufarbeitung von bestrahlten Kernbrennstoffen oder aus einer konzentrierten Lösung von Plutonium, die Americium enthält, besteht, **dadurch gekennzeichnet,** daß die wäßrige Lösung mit einer organischen Lösung zusammengebracht wird, welche mindestens einen Kronenether umfaßt, und daß das in die organische Lösung extrahierte Plutonium durch Rückextraktion in eine wäßrige Lösung zurückgewonnen wird.

**2.** Verfahren nach Anspruch 1, **dadurch gekennzeichnet,** daß die organische Lösung ein Verdünnungsmittel, bestehend aus Benzonitril, Nitrobenzol oder Dichlorethan, umfaßt.

**3.** Verfahren nach Anspruch 2, **dadurch gekennzeichnet,** daß die Konzentration des Kronenethers in der organischen Lösung $10^{-3}$ bis 2,5 Mol/l beträgt.

4. Verfahren nach Anspruch 1, **dadurch gekennzeichnet,** daß die wäßrige Rückextraktionslösung eine Schwefelsäurelösung ist, die 0,05 bis 2 Mol/l Schwefelsäure enthält.

5. Verfahren nach einem der Ansprüche 1 bis 4, **dadurch gekennzeichnet,** daß es mindestens einen zusätzlichen Schritt des Waschens der organischen Lösung, welche das Plutonium extrahiert hat, mit einer wäßrigen Salpetersäurelösung umfaßt, bevor der Schritt der Rückextraktion des Plutoniums durchgeführt wird.

6. Verfahren nach Anspruch 5, **dadurch gekennzeichnet,** daß die wäßrige Salpetersäurelösung eine Salpetersäurekonzentration von 2 bis 5 Mol/l hat.

7. Verfahren zur Rückgewinnung von Spuren von Plutonium (IV), welche in einer wäßrigen Lösung vorhanden sind, **dadurch gekennzeichnet,** daß die wäßrige Lösung mit einer festen Phase zusammengebracht wird, welche mindestens einen Kronenether umfaßt, um das Plutonium an dieser festen Phase zurückzuhalten.

8. Verfahren nach Anspruch 7, **dadurch gekennzeichnet,** daß die feste Phase aus anorganischem oder organischem Material besteht und daß der Kronenether an dieser festen Phase durch eine chemische Bindung oder Adsorption gebunden ist.

9. Verfahren nach Anspruch 8, **dadurch gekennzeichnet,** daß die feste Phase Florisil ist.

10. Verfahren nach einem der Ansprüche 7 bis 9, **dadurch gekennzeichnet,** daß anschließend das Plutonium durch Zusammenbringen der festen Phase mit einer Lösung eines Reduktionsmittels oder einer hydrophilen Säure zurückgewonnen wird.

11. Verfahren nach einem der Ansprüche 1 bis 10, **dadurch gekennzeichnet,** daß der Kronenether die Formeln hat:

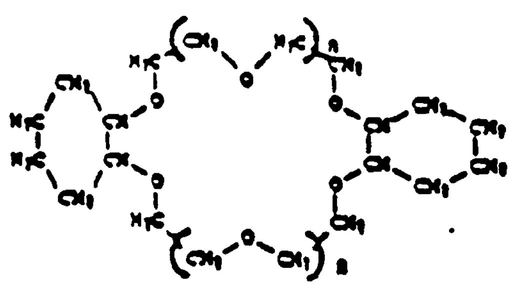

(I)

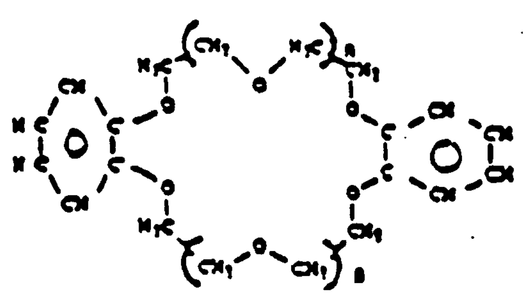

(II)

worin n 0 oder eine ganze Zahl von 1 bis 40 ist.

12. Verfahren nach Anspruch 11, **dadurch gekennzeichnet,** daß der Kronenether die Formel (I) mit n = 1 hat.

13. Verfahren nach Anspruch 11, **dadurch gekennzeichnet,** daß der Kronenether das cis-syn-cis-Isomere des Kronenethers der Formel (I) ist, worin n = 1 ist.

14. Verfahren nach einem der Ansprüche 1 bis 6, **dadurch gekennzeichnet,** daß die wäßrige Lösung eine

konzentrierte Lösung von Plutonium, die Americium enthält, ist, und daß das cis-anti-cis-Isomere des Kronenethers der Formel

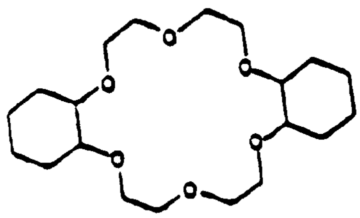

verwendet wird.

## Claims

1. Method to recover plutonium (IV) present in an aqueous solution constituted by either a concentrated solution of fission products derived from the first cycle for reprocessing irradiated nuclear fuels or by an aqueous effluent derived from an irradiated nuclear fuels reprocessing installation or by a concentrated solution of plutonium containing americium, wherein said aqueous solution is placed in contact with an organic solution including at least one crown compound and wherein the plutonium extracted from the organic solution is recovered by re-extracting it from an aqueous solution.

2. Method according to claim 1, wherein the organic solution includes a diluting agent constituted by benzonitrile, nitrobenzene or dichlorethane.

3. Method according to claim 2, wherein the crown compound concentration of the organic solution is 10 - 3 at 2.5 mols/l.

4. Method according to claim 1, wherein the aqueous re-extraction solution is a sulphuric acid solution containing 0.05 to 2 mols/l of sulphuric acid.

5. Method according to any one of claims 1 to 4, wherein it includes at least one additional stage for washing the organic solution having extracted the plutonium by an aqueous solution of nitric acid before carrying on to the plutonium re-extraction stage.

6. Method according to claim 5, wherein the aqueous solution of nitric acid has a nitric acid concentration of between 2 and 5 mols/l.

7. Method to recover traces of plutonium (IV) present in an aqueous solution, wherein this aqueous solution is placed in contact with a solid phase including at least one crown compound so as to retain the plutonium on this solid phase.

8. Method according to claim 7, wherein the solid phase is an organic or inorganic substance and wherein the crown compound is secured to this solid phase by means of a chemical linkage or by adsorption.

9. Method according to claim 8, wherein the solid phase is Florisil.

10. Method according to any one of claims 7 to 9, wherein the plutonium is next recovered by placing the solid phase in contact with a solution of a reducing agent or of a hydrophilic acid.

11. Method according to any one of claims 1 to 10, wherein the crown compound satisfies the formulae :

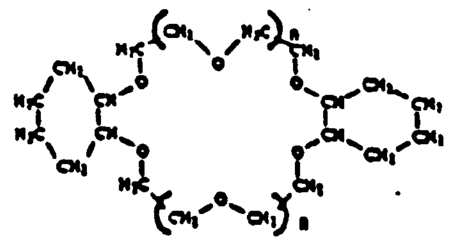

(I)

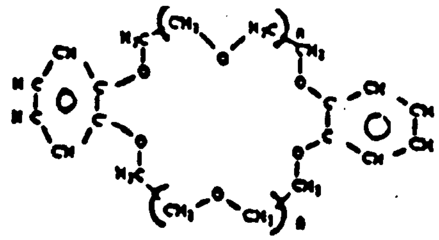

(II)

in which n = 0 or is a whole number ranging from 1 to 40.

**12.** Method according to claim 11, wherein the crown compound satisfies the formula (I) with n = 1.

**13.** Method according to claim 11, wherein the crown compound is the cis-syn-cis isomer of the crown compound of formula (I) in which n = 1.

**14.** Method according to any one of claims 1 to 6, wherein the aqueous solution is a concentrated solution of plutonium containing americium and wherein the cis-anti-cis isomer of the crown compound is used with the formula :

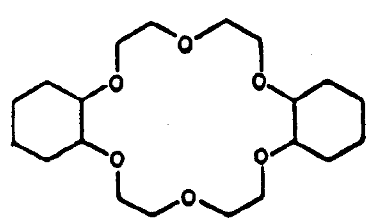

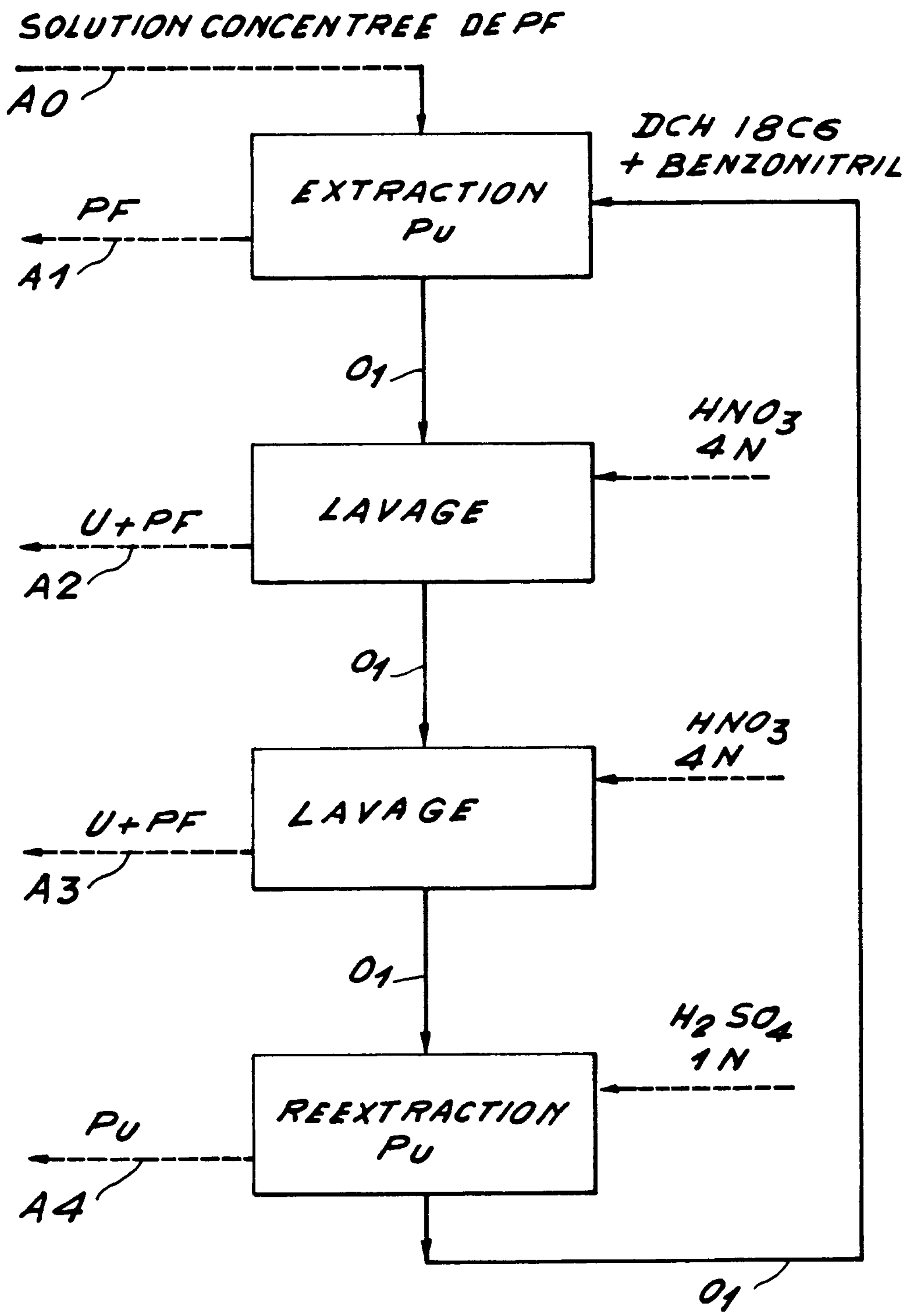
SOLUTION CONCENTREE DE PF
A0
DCH 18C6
+ BENZONITRIL
EXTRACTION
Pu
PF
A1
O1
HNO3
4N
LAVAGE
U+PF
A2
O1
HNO3
4N
LAVAGE
U+PF
A3
O1
H2 SO4
1 N
REEXTRACTION
Pu
Pu
A4
O1